# EUROPÄISCHE PATENTANMELDUNG

(11) **EP 1 149 735 A1**
(43) Veröffentlichungstag der Anmeldung: **31.10.2001**
(21) Anmeldenummer: 01109567.6
(22) Anmeldetag: 18.04.2001
(51) Int. Cl.: B60R 11/02, A47B 81/06, A47B 21/00, B64D 11/00

(54) **Fernsehschrank mit absenkbarem Fernseher für ein Land-, Wasser- oder Luftfahrzeug**

(30) Priorität: 29.04.2000 DE 20007854 U
(71) Anmelder: Hymer AG, 88339 Bad Waldsee (DE)
(72) Erfinder: Dorn, Günther, 88281 Schlier/Wetzisreute (DE)
(74) Vertreter: Riebling, Peter, Dr.-Ing.

(57) **Zusammenfassung**

Fernsehschrank mit absenkbarem oder anhebbarem Fernseher für ein Land-, Wasser- oder Luftfahrzeug, insbesondere ein Wohnmobil, der aus einem im Fahrzeug angeordneten Hoch- oder Unterschrank besteht, der eine vordere, um eine horizontale Achse schwenkbare Zugangsklappe aufweist und in dem schwenkbar eine Schwenkkonsole gelagert ist, die das Fernsehgerät trägt, wobei die Schwenkkonsole insgesamt um eine horizontale Achse (Scharnierachse) zusammen mit einem Teil der Bodenwand des Schrankgehäuses schwenkbar gelagert ist und an ihrem schwenkbaren Ende ein Traggestell angeordnet ist, welches den Fernseher aufnimmt.

## Beschreibung

Die Erfindung betrifft einen Fernsehschrank mit absenkbarem oder anhebbarem Fernseher für ein Land-, Wasser- oder Luftfahrzeug, insbesondere für ein Wohnmobil nach dem Oberbegriff des Patentanspruchs 1.

Der einfacheren Beschreibung wegen wird im folgenden lediglich der Fernsehschrank in seiner Verwendung in einem Wohnmobil näher beschrieben, obwohl der Schutzbereich der vorliegenden Erfindung sich auf Fernsehschränke in Land-, Wasser- oder Luftfahrzeugen bezieht.

Aus einem älteren Gebrauchsmuster des gleichen Anmelders ist bereits ein Fernsehschrank bekannt geworden, bei dem das Fernsehgerät in einem in Dachnähe des Fahrzeuges angeordnetem Hochschrank untergebracht wird der eine vordere, um eine obere, horizontale Achse schwenkbare Klappe aufweist.

Das Fernsehgerät war dort auf einer Schwenkkonsole gelagert, welche ermöglichte, daß das Fernsehgerät in einer Überkopf-Stellung in den Innenraum des Hoch- oder Unterschrankes eingeschwenkt werden konnte und - in Gebrauchstellung - aus dieser Überkopfstellung im Hochschrank in eine abgesenkte Normallage aus dem Hochschrank herausschwenkbar war.

Eine derartige Technik hat sich bewährt, jedoch hat sich herausgestellt, daß die Überkopf-Staustellung des Fernsehgerätes im Hochschrank von vielen Fernsehgeräten nicht vertragen wurde. Es kam zu Funktionsausfällen.

Der Erfindung liegt deshalb die Aufgabe zu Grunde, einen Fernsehschrank der eingangs genannten Art so weiterzubilden, daß das Fernsehgerät im Hochschrank nicht mehr in einer Überkopf-Position verstaut wird, sondern daß es in Normallage im Hochschrank untergebracht werden kann und ebenso in Normallage auch zum Hochschrank in eine abgesenkte Stellung herabgeschwenkt werden kann.
Zu Lösung der gestellten Aufgabe ist die Erfindung durch die technische Lehre des Anspruches 1 gekennzeichnet.

Wesentliches Merkmal der Erfindung ist, daß nun eine Schwenkkonsole vorgesehen ist, die insgesamt um eine horizontale Achse zusammen mit einem Teil der Bodenwand des Schrankgehäuses schwenkbar gelagert ist und wobei an Ihrem schwenkbaren Ende ein Traggestell angeordnet ist, welches den Fernseher aufnimmt.

Das Fernsehgerät ist also in einem etwa C-förmig profiliertem Traggestell angeordnet, welches bevorzugt halbkardarnisch am vorderen freien Ende einer Schwenkkonsole gelagert ist, so daß hiermit erstmals die Möglichkeit geboten wird, das Fernsehgerät in seiner Normallage im Hochschrank unterzubringen und gleichfalls in seiner Normallage aus dem Hochschrank herauszuschwenken und in eine abgesenkte, untere Stellung zu bringen.

Hierbei ist wesentlich, daß das den Fernseher aufnehmende Traggestell um eine horizontale Achse schwenkbar am oberen, freien Ende der Schwenkkonsole angebracht ist, um bei einer 90°-Schwenkung der Schwenkkonsole zu gewährleisten, daß das Traggestell stets in einer aufrechten Position zu erhalten.

In einer Weiterbildung der Erfindung ist es vorgesehen, daß das Traggestell auch noch zusätzlich um eine horizontale Achse am vorderen, freien Ende der Schwenkkonsole gelagert ist. Damit wird gewährleistet, daß der in seine Gebrauchslage abgesenkte Fernseher noch um eine horizontale Achse verdreht werden kann, um auch seitlich vor dem Fernsehschrank sitzende Beobachter einen vollständigen Blick auf die Bildröhre des Fernsehgerätes zu ermöglichen.

Das Traggestell ist also nach dem ersten, wichtigem Merkmal schwenkbar am vorderen, freien Ende der Schwenkkonsole angeordnet und kann in einer zusätzlichen, weiteren Ausgestaltung auch noch drehbar am freien Ende der Schwenkkonsole angeordnet sein.
Diese Dreh- und Verschwenkbarkeit wird als halbkardarnische Aufhängung bezeichnet.

Es handelt sich also um eine Dreh- und eine Schwenkbewegung die um zwei zueinander senkrechte Achsen erfolgt.

Dadurch, daß die Schwenkkonsole mit Ihrem fußseitigem Ende auf einer Bodenwand des Schrankgehäuses montiert ist, die ihrerseits um eine horizontale Achse schwenkbar ausgebildet ist, ergibt sich damit die Möglichkeit, daß man die Schwenkkonsole insgesamt von einer angehobenen, im Hochschrank verborgenen Staulage in eine abgesenkte, aus dem Hochschrank herausgeschwenkte, untere Gebrauchslage verschwenken kann.

Die Erfindung wird nun anhand von Zeichnungen näher beschrieben. Hierbei ergeben sich aus den Zeichnungen und Ihre Beschreibung weitere Merkmale und Vorteile der Erfindung.

Es zeigen:
Figur 1: Schnitt durch einen Fernsehschrank nach der Erfindung mit zwei verschiedenen Schwenkpositionen der Schwenkkonsole.
Figur 2: Vorderansicht des Fernsehschrankes nach Figur 1 in Staustellung
Figur 3: Draufsicht auf den Fernsehschrank nach Figur 1 von oben.

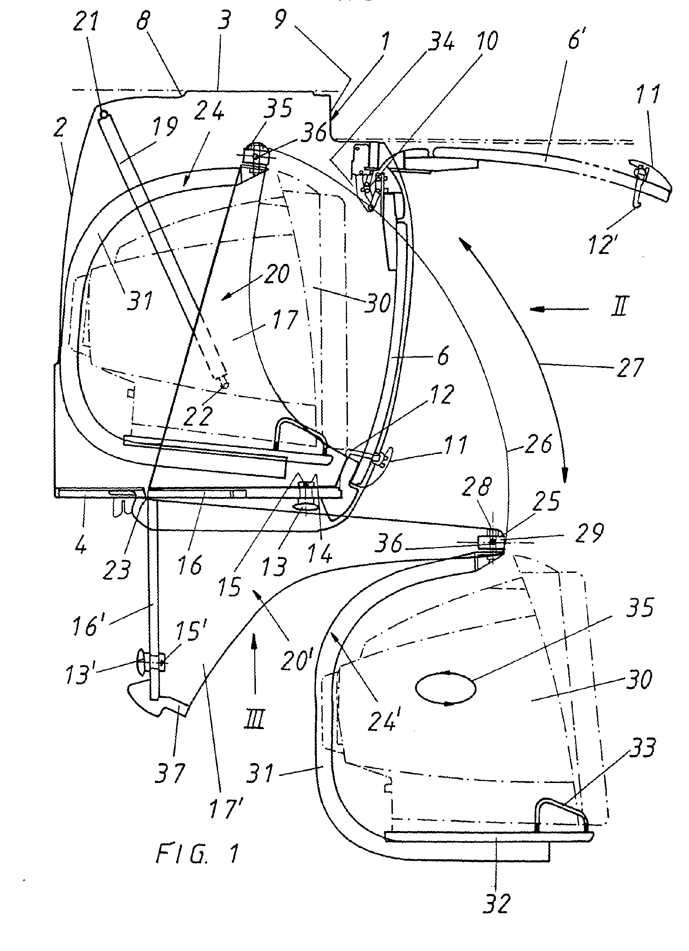

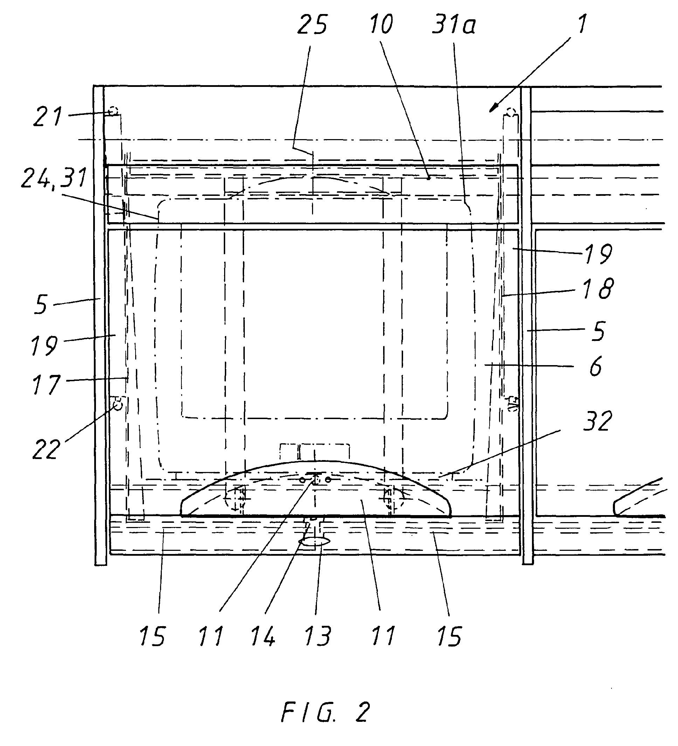

In den Figuren 1 bis 3 ist allgemein ein Schrankgehäuse 1 dargestellt, welches als Hochschrank oder Unterschrank ausgebildet ist, der in Dachnähe oder Bodennähe eines Land-, Wasser- oder Luftfahrzeuges angeordnet ist.

Das Schrankgehäuse besteht im wesentlichen aus einer Rückwand 2, die nach oben hin durch eine Deckwand 3 abgedeckt ist, sowie aus 2 zueinander parallelen Seitenwänden 5, die an die Rückwand 2 und die Deckwand 3 anschließen.
Unten ist das Schrankgehäuse durch eine zweiteilige Bodenwand abgedeckt, wobei die Bodenwand 4 als fester Teil an der Rückwand 2 angeschlossen ist, während eine Bodenwand 16 um eine horizontale Scharnierachse 23 schwenkbar Pfeilrichtungen 27 an der Bodenwand 4 angesetzt ist.

Die Erfindung ist nicht darauf beschränkt, daß das Fernsehgerät 30 in einem Schrankgehäuse 1 untergebracht ist. Es können demzufolge die Rückwand 2 und/oder die Deckwand 3 und/oder die Seitenwände 5 entfallen.

Nach vorne hin ist das Schrankgehäuse 1 durch eine Zugangsklappe 6 abgedeckt, die um eine horizontale Schwenkachse 10 an der Deckwand 3 schwenkbar angeordnet ist. Hierbei bildet die Deckwand 3 einen vorderen, nach unten weisenden Absatz 9, an dessen vorderen freien Ende die Schwenkachse 10 für die Zugangsklappe 6 angeordnet ist.

Aus Figur 1 ergibt sich im übrigen, daß das Scharnier der Zugangsklappe 6 als Möbelscharnier 34 mit zwei Scharnierlenkern ausgebildet ist.

Am vorderen, freien Ende der Zugangsklappe 6 ist ein Betätigungsgriff 11 angeordnet, der einen nach innen weisenden Haken 12 aufweist, so daß in der Schließstellung der Zugangsklappe 6 der Haken 12 einen entsprechenden Vorsprung an einem Ansatz 37 der Bodenwand 16 hintergreift.

Auf der Bodenwand 16 ist nun der Fußteil einer Schwenkkonsole 20 montiert, die aus zwei einen gegenseitigen Abstand zueinander einnehmenden und parallel zueinander angeordneten Konsolarmen 17,18 besteht.

Die Konsolarme 17,18 sind oben durch einen Querträger verbunden, in dessen Mittenbereich ein Drehlager 25 für die Schwenk-Dreh-Lagerung des C-förmig profiliertem Traggestells 24 angeordnet ist.

An beiden Seiten des jeweiligen Konsolarmes 17,18 ist jeweils eine Gasdruckfeder 19 angeordnet, welche mit einem Ende an einem oberen Schwenklager 21 an der jeweiligen Seitenwand 5 des Schrankgehäuses 1 befestigt ist, während das untere Schwenklager 22 am freien, schwenkbaren Teil des jeweiligen Konsolarmes 17,18 befestigt ist.

Das Verschwenken der Schwenkkonsole 20 in Pfeilrichtung 27 nach unten erfolgt also gegen den Widerstand der Gasdruckfeder 19, so daß die Schwenkbewegung hierdurch gedämpft wird, während das Hochschwenken der herausgeschwenkten Schwenkkonsole 20 unter Zugkrafteinwirkung der Gasdruckfeder 19 erleichtert wird.

Das vorher erwähnte, zentrale Drehlager 25 für die Schwenk- Drehlagerung des Traggestells 24 weist einen vertikalen Drehstift 28 auf, um den herum das Traggestell um diese vertikale Achse drehbar ausgebildet ist.

Ferner ist eine hierzu senkrechte, horizontale Schwenkachse 36 vorhanden, die dafür sorgt, daß beim Verschwenken der Schwenkkonsole 20 um die in Figur 1 eingezeichnete Schwenkkurve 26 das Traggestell 20 in einer aufrecht stehenden Stellung in Pfeilrichtung 27 nach unten in die Stellung 24' verschwenkt werden kann.

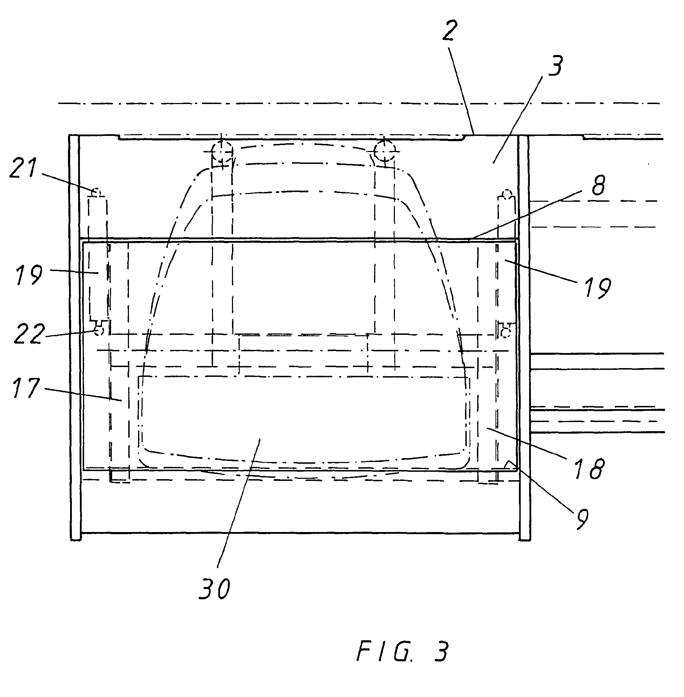

Das Traggestell 24 besteht hierbei aus zwei im Querschnitt etwa C-förmigen Tragarmen 31,31a die gemäß Figur 3 in ihrem oberen Bereich zusammenlaufen, und dort das zentrale Drehlager 25 angeordnet ist.

In einer anderen, nicht zeichnerisch dargestellten Ausführungsform kann es auch vorgesehen sein, daß statt des einen zentralen Drehlagers lediglich eine horizontale Schwenkachse 36 vorhanden ist, so daß die Verdrehung um den vertikalen Drehstift 28 insgesamt entfällt. Es können dann zwei nebeneinanderliegende Schwenklager vorhanden sein, weil lediglich eine Verschwenkung um die Schwenkachse 36 vorgesehen ist.
Ferner weist das Traggestell 24 einen Tragboden 32 auf, auf dem das Fernsehgerät 30 angeordnet ist, welches demzufolge um die Drehachse 35 verschwenkbar ist.

Am Tragboden 32 sind im übrigen beiderseits noch Handgriffe 33 angeordnet, die gleichzeitig die seitlichen Anschläge für das Fernsehgerät 30 bilden.

Um ein gefedertes Verschwenken in den Pfeilrichtungen 27 zu gewährleisten ist im übrigen im Drehlager 25 eine Elastomerscheibe 29 angeordnet, welche die Drehbewegung dämpft.

In Schließstellung nach Figur 1 bildet die Bodenwand 16 den unteren Abschluß des Schrankgehäuses 1, wobei eine Verriegelungseinrichtung vorhanden ist, um das unbeabsichtigte Verschwenken dieser Bodenwand zu vermeiden.

Die Verschlussvorrichtung besteht aus einem Drehgriff 13, der über eine Umlenkvorrichtung 14 mit horizontal verschiebbaren und gegeneinander bewegbaren Schubriegeln 15 zusammenwirkt.

Jeweils ein Schubriegel 15 greift links und rechts in jeweils eine zugeordnete Ausnehmung in jeweils einer Seitenwand 5 ein, so daß damit die Schwenklage der Bodenwand 16 arretiert ist.

Wird der Drehgriff 13 betätigt, dann werden die in der Umlenkvorrichtung 14 jeweils einseitig gehaltenen Schubriegel 15 gegeneinander bewegt und aus ihren Ausnehmungen in der jeweiligen Seitenwand 5 herausgelöst, wodurch die Bodenwand 16 zusammen mit der darauf befestigten Schwenkkonsole 20 in ihrer Stellung 16',20' verschwenkt wird.

Das Verschwenken erfolgt hierbei entgegen dem Widerstand der Gasdruckfeder 19, so daß eine kontrollierte Schwenkbewegung in Pfeilrichtung 27 nach unten stattfindet.
Voraussetzung hierfür ist natürlich, daß vorher die Zugangsklappe 6 in ihrer Stellung 6' aufgeschwenkt wurde.

Wichtig hierbei ist, daß der vorher in aufrechter Stellung im Schrankgehäuse 1 auf dem Traggestell 24 ruhende Fernseher nun in der gleichen Stellung (also unter Vermeidung der Überkopf-Lage) nach unten in eine abgesenkte Stellung gemäß Figur 1 verschwenkt wird.

Die Figur 1 zeigt im übrigen, daß im hinteren Bereich des Schrankgehäuses noch ein Absatz 8 vorhanden ist, der jedoch nur für die Anpassung des Schrankgehäuses 8 an die gegebene Einbausituation notwendig ist.

### Zeichnungslegende

- 1: Schrankgehäuse
- 2: Rückwand
- 3: Deckwand
- 4: Bodenwand
- 5: Seitenwand
- 6: Zugangsklappe 6'
- 8: Absatz
- 9: Absatz
- 10: Schwenkachse
- 11: Betätigungsgriff
- 12: Haken
- 13: Drehgriff
- 14: Umlenkvorrichtung
- 15: Schubriegel
- 16: Bodenwand 16'
- 17: Konsolarm
- 18: Konsolarm
- 19: Gasdruckfeder
- 20: Schwenkkonsole 20'
- 21: oberes Schwenklager
- 22: unteres Schwenklager
- 23: Scharnierachse
- 24: Traggestell 24'
- 25: Drehlager
- 26: Schwenkkurve
- 27: Pfeilrichtung
- 28: Drehstift
- 29: Elastomenscheibe
- 30: Fernsehgerät
- 31: Tragarm 31a
- 32: Tragboden
- 33: Handgriff
- 34: Möbelscharnier
- 35: Drehachse
- 36: Schwenkachse
- 37: Ansatz

## Patentansprüche

1. Fernsehschrank mit absenkbarem oder anhebbarem Fernseher für ein Land-, Wasser- oder Luftfahrzeug, insbesondere ein Wohnmobil, der aus einem im Fahrzeug angeordneten Hoch- oder Unterschrank besteht, der eine vordere, um eine horizontale Achse schwenkbare Zugangsklappe (6) aufweist und in dem schwenkbar eine Schwenkkonsole (20) gelagert ist, die das Fernsehgerät (30) trägt,
**dadurch gekennzeichnet, daß** die Schwenkkonsole (20) insgesamt um eine horizontale Achse (Scharnierachse 23) zusammen mit einem Teil der Bodenwand (16) des Schrankgehäuses (1) schwenkbar gelagert ist und an ihrem schwenkbaren Ende ein Traggestell (24) angeordnet ist, welches den Fernseher (30) aufnimmt.

2. Fernsehschrank nach Anspruch 1, **dadurch gekennzeichnet, daß** das Traggestell (24) mit einem, oberen zentralen Drehlager (25) dreh- und schwenkbar, am schwenkbaren Teil der Schwenkkonsole (20) gelagert ist.

3. Fernsehschrank nach Anspruch 2, **dadurch gekennzeichnet, daß** die Dreh-und Schwenkbewegung des Traggestells (24) um zwei zueinander senkrechte Achsen erfolgt.

4. Fernsehschrank nach einem der Ansprüche 1-3, **dadurch gekennzeichnet, daß** die Schwenkkonsole (20) in Schließstellung im Schrankgehäuse (1) durch eine Verschlußvorrichtung (13,14,15) arretiert ist, die aus einem an der schwenkbaren Bodenwand (16) ansetzenden Drehgriff (13) besteht, der über eine Umlenkvorrichtung etwa in horizontaler Richtung verschiebbare und in deren Längsrichtung angetriebene Schubriegel (15) beanschlagt, die in Schließstellung in zugerundete Ausnehmungen in den Seitenwänden (5) des Schrankgehäuses greifen.

5. Fernsehschrank nach einem der Ansprüche 1-4, **dadurch gekennzeichnet, daß** die Schwenkkonsole (20) aus zwei zueinander parallelen Konsolarmen (17) besteht, welche durch die Bodenwand (16) miteinander verbunden sind und die mit ihren hinteren Enden an der festen Bodenwand (4) des Schrankgehäuses (1) in einer horizontalen Achse schwenkbar gelagert sind.

6. Fernsehschrank nach einem der Ansprüche 1-5, **dadurch gekennzeichnet, daß** an den Konsolträgern mindestens eine Gasdruckfeder (19,19 a) angreift, die mit ihrem anderen Ende an der Innenseite des Schrankgehäuses (1) angelenkt ist.

7. Fernsehschrank nach einem der Ansprüche 1-6, **dadurch gekennzeichnet, daß** das Fernsehgerät (30) sowohl in seiner Staulage als auch in seiner Gebrauchslage in aufrecht stehender Lage gehalten ist.
